# EUROPEAN PATENT SPECIFICATION

(11) **EP 0 813 287 B1**
(45) Date of publication and mention of the grant of the patent: **22.11.2000**
(21) Application number: 97304084.3
(22) Date of filing: 11.06.1997
(51) Int. Cl.: H02K 19/10, H02K 29/03

(54) **Switched reluctance motors**
Geschalteter Reluktanzmotor
Moteur à réluctance commuté

(30) Priority: 11.06.1996 JP 14918496
(43) Date of publication of application: 17.12.1997
(73) Proprietor: AISIN SEIKI KABUSHIKI KAISHA, Kariya City Aichi Pref. (JP)
(72) Inventor: Sakuma, Masafumi, Chiryu city, Aichi Pref. (JP); Ookawa, Akemi, Chita-gun, Aichi-pref. (JP)
(74) Representative: SERJEANTS

(56) References cited:
- WO-A-86/06891
- DE-A- 4 306 327
- US-A- 5 418 415
- PATENT ABSTRACTS OF JAPAN vol. 007, no. 280 (E-216), 14 December 1983 & JP 58 157358 A (NIHON SAABO KK), 19 September 1983,
- PATENT ABSTRACTS OF JAPAN vol. 096, no. 004, 30 April 1996 & JP 07 336917 A (TOSHIBA CORP), 22 December 1995,
- PATENT ABSTRACTS OF JAPAN vol. 018, no. 137 (E-1518), 7 March 1994 & JP 05 316701 A (MITSUBISHI HEAVY IND LTD), 26 November 1993,

## Description

The invention relates to switched reluctance motors which are operated mainly in one rotational direction, and are suitable as a power source of an electric vehicle.

A typical switched reluctance motor has a ring-like stator with pole portions in a cylindrical arrangement and is provided with coil windings. A rotor is inside the stator and provided with poles facing the pole portions of the stator. The rotor normally comprises a core formed of a stack of iron or steel plates. The coils and pole portions act as electromagnets to attract the rotor poles. This type of motor is disclosed in, for example JP Laid Open Sho 48(1973)-77314, JP Laid-Open Sho 61(1986)-203847 and US 3,956,678.

Such motors, which generate torque from magnetic forces between the rotor poles and the stator by energization of the coils, normally produce considerable vibration. This is because in each cycle of energization the radial magnetic force increases with rotation of the rotor, reaches a maximum and abruptly discontinues on energization switching. The above US Patent incorporates slits formed on the side of the rotor poles facing in the rotational direction of the rotor. This considerably reduces the torque output.

WO-A-8606891, discloses a reluctance motor comprising a stator having two salient poles and a rotor also having two poles. The poles of the stator and the poles of the rotor are each provided with a recess so that the motor can rotate in the desired direction even from a start-up position wherein the stator poles completely coincide with the rotor poles.

According to the invention a weak or non-magnetic portion in each of the rotor poles extends inward and in the rotational direction from a position close to an outer end of the pole and at the side of the pole facing in the direction of counter-rotation wherein the weak or non-magnetic portion (15) extends radially inward from a position close to a radially outer end of the pole (14). This reduces the magnetic force at the time of energization switching in a simple manner and ensures generation of a desired amount of torque.

The weak or non-magnetic portion may be in the form of a groove which may contain non-magnetic high-electric resistance material or be in the form of a hole. The said portion may have a side which extends radially inward. The groove may be elongated and rounded-ended or elliptical for example. The numbers of stator and rotor poles may be 12 and 8 or 6 and 4 respectively for example.

In operation, up to the moment when a rotational direction-facing end portion of a rotor pole overlaps (faces) an end portion of a stator pole portion, magnetic flux concentrates in the end portions of the rotor and the stator, producing a torque and a magnetic attraction regardless of any weak or non-magnetic portion. On further rotation, the rotor pole overlaps the stator pole portion that is the pole areas facing each other increase, and the magnetic attraction increases. However, the increase in the magnetic flux contributing to the increase in the magnetic attraction force is curbed by the weak or non-magnetic portion. Therefore, when a counter-rotational direction-facing end portion of the rotor pole overlaps the end of the stator pole portion, the magnetic flux extending through the rotor pole is blocked or interfered with. Increase in the magnetic attraction force is thereby curbed. Since the force (torque) to rotate the rotor is determined mainly by the magnetic force between a rotational direction-facing end of the rotor pole and an end of the stator pole portion the curb on the increase in the magnetic force provided by the weak or non-magnetic portion does not remarkably reduce the torque.

### DRAWINGS

Fig. 1 is a cross-section through a first switched reluctance motor according to the invention;
Fig. 2 is an elevation of a rotor in Fig. 1;
Fig. 3 is an elevation of a rotor according to a second switched reluctance motor according to the invention;
Fig. 4 shows the relationship of the torque to the rotor angle of a switched reluctance motor according to the invention and of a conventional motor;
Fig. 5 shows the relationship of the magnetic force to the rotor angle of a switched reluctance motor according to the invention and of a conventional motor; and
Fig. 6 shows the relationship of the noise to the motor operating speed of a switched reluctance motor according to the invention and of a conventional motor.

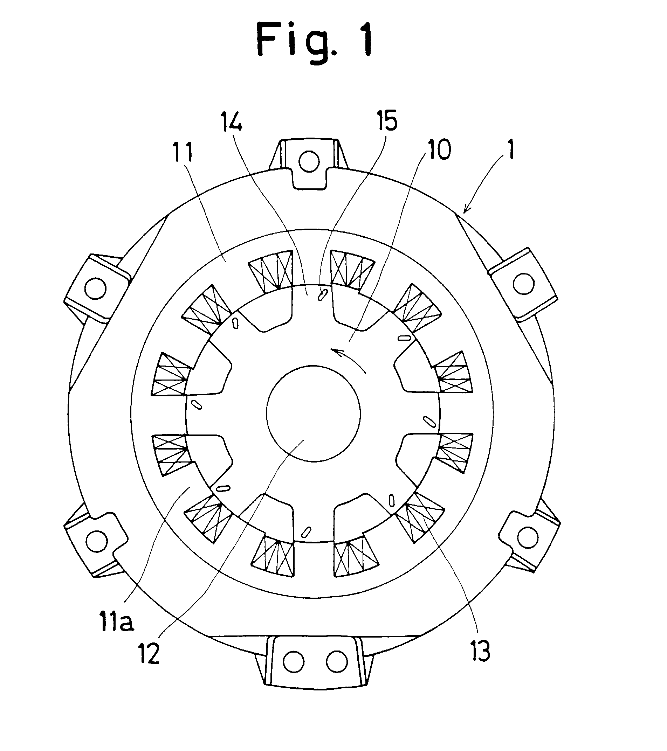

With particular reference to Fig. 1, the motor 1 has twelve pole portions in a stator 11 and eight projected poles in a rotor 10. The stator 11 is formed of a stack of annular magnetic steel plates, and has pole portions 11a extending axially of the stator 11 and projecting from the inner peripheral face so that a pair are located opposite each other. The stator 11 is fixed by thermally fitting an outer peripheral portion into a hollow portion of a housing. Six pairs of oppositely-disposed pole portions lla are divided into three groups of two pairs, and the pole portions 11a of each group are provided with interconnected coil windings 13, thereby forming a three-phase construction.

The rotor 10 is formed of a stack of magnetic steel plates and has a central hole in which a shaft 12 is fixed. The shaft 12 is rotatably supported on side housings (not shown) by bearings. The rotor 10 is thus rotatable with the shaft 12 inside the stator 11. The rotor 10 has four pairs of poles 14 equidistantly spaced so that each pair projects radially outward in opposite directions. The poles 14 extend in the direction of the axis of the rotor 10. When the poles 14 face the pole portions lla during rotation of the rotor 10, each pole 14 maintains a predetermined clearance from the facing pole portion lla as can be seen in Fig. 1. The rotor 10 rotates counter-clockwise. Each pole 14 has a weak-magnetic portion 15 provided at a radially outer end near or at a side facing in the clockwise direction, i.e., the direction opposite to the rotational direction.

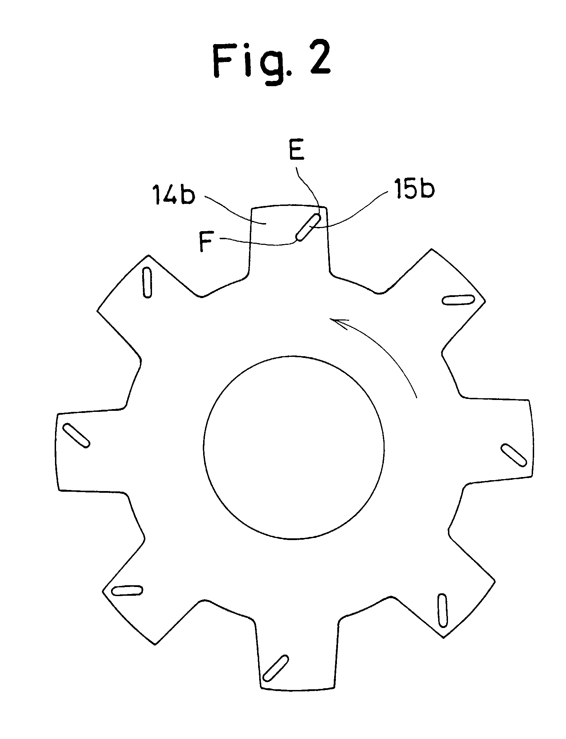

In Fig. 2, the weak-magnetic portion 15 of each pole 14b is an elongated, rounded-ended groove 15b extending from a point E relatively close to a radially outer end of the pole 14b at an end facing in the clockwise direction, i.e., the counter-rotational direction. The groove 15b extends to a point F relatively close to a radially inner end of the pole 14b at an end facing in the counter-clockwise direction, i.e., the rotational direction.

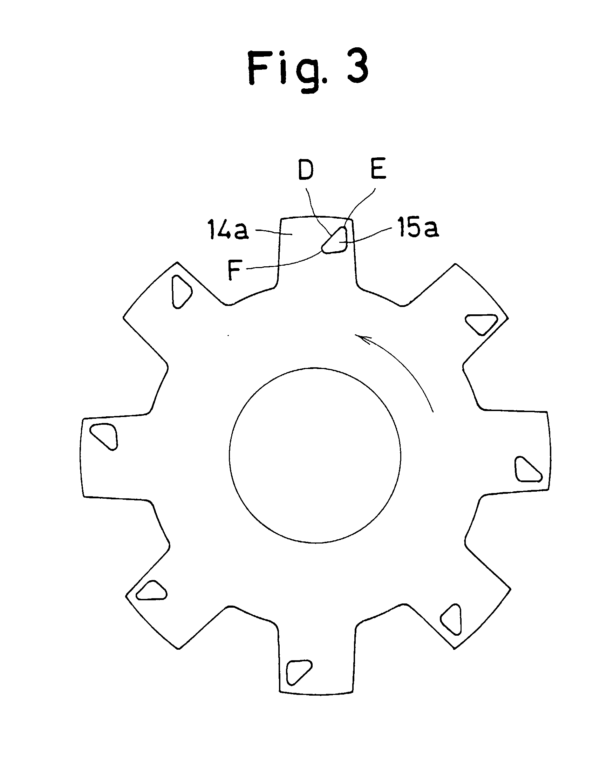

In Fig. 3, each weak-magnetic portion 15 is in the form of a generally triangular hole 15a that has a side D extending from a point E relatively close to a radially outer end of the pole 14a at a side facing in the clockwise direction, i.e., the counter-rotational direction. The side D of the triangular hole 15a extends inwardly and in the direction of rotation from the point E to a point F. The corners of the triangular holes 15a are rounded.

When a coil 13 is energized, there is magnetic attraction between adjacent poles 14 and pole portions lla. Due to a component of the magnetic force, torque acts on the rotor 10 and the pole 14 faces the pole portion lla. By switching energization of the coils 13, torques continually act on the rotor 10, thereby continuing rotation of the rotor 10.

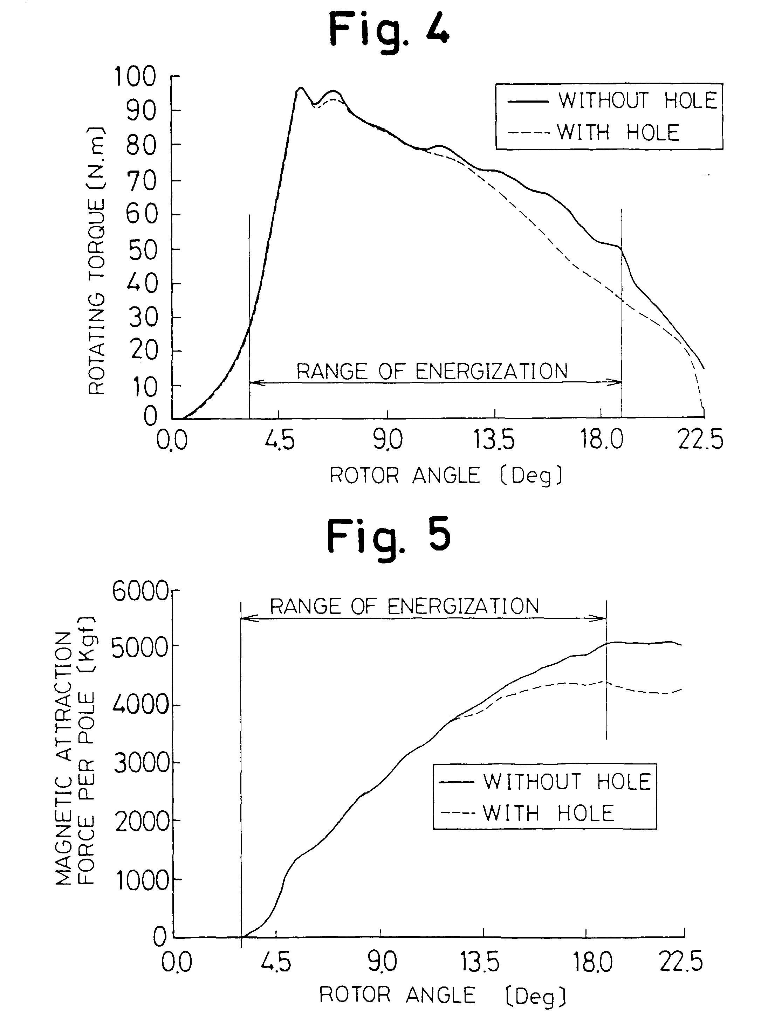

In the graphs of Figs. 4 and 5, a rotor angle of 0° is defined at a position of the rotor 10 at which a pole portion lla of the stator 11 is at a mid point between two neighbouring poles 14. Therefore, the position of the rotor 10 where a pole 14 exactly aligns with or faces the pole portion 11a is 22.5°. The solid-line and broken-line curves in Figs. 4 and 5 indicate a conventional reluctance motor (without a hole) and a switched reluctance motor according to the invention (with holes).

The torque and the magnetic force increase with rotation of the rotor 10 from when a rotational direction-facing end portion of a pole 14 overlaps an end portion of a pole portion lla to when the weak-magnetic portion 15 overlaps (faces) the pole portion lla, since the pole 14 is not blocked or interfered with by the weak-magnetic portion 15 during that period. The torque reaches a peak before the weak-magnetic portion 15 overlaps (faces) the pole portion lla and then gradually decreases as the torque is produced by a component of the magnetic force on the pole 14.

The magnetic attraction force increases as the areas of the pole 14 and the pole portion 11 that face each other increases with rotation of the rotor 10, as indicated in Fig. 5. However, the increase of the magnetic flux contributing to an increase of the magnetic attraction force is curbed by the weak-magnetic portion 15. When a counter-rotational direction-facing end portion of the pole 14 overlaps an end portion of the pole portion 11a of the stator 11, the magnetic flux in the pole 14 is blocked by the weak-magnetic portion 15, thus curbing the increase of the magnetic force. The magnetic force at the time of energization switching is thereby reduced to about 4250 kgf from a conventional value of about 5000 kgf. The torque is mainly determined by a component of the magnetic force between a rotational direction-facing end portion of the pole 14 and an end portion of the pole portion 11a. Since the weak-magnetic portion 15 has a shape as shown in Figs. 2 and 3, the portion 15 does not significantly reduce the magnetic flux component that causes the pole 14 to move to face the pole portion lla. Therefore, the curb on the increase of the magnetic force achieved does not involve a significant reduction in the torque. The torque decreases by only a few percent from the torque produced by the conventional motor. In Fig. 4, that torque is within the range of energization. Thus the magnetic force at the time of switching the coils 13 to be energized is reduced while maintaining generation of a desired amount of torque. The necessary torque is thus produced without increasing the number of winding turns of the coils 13.

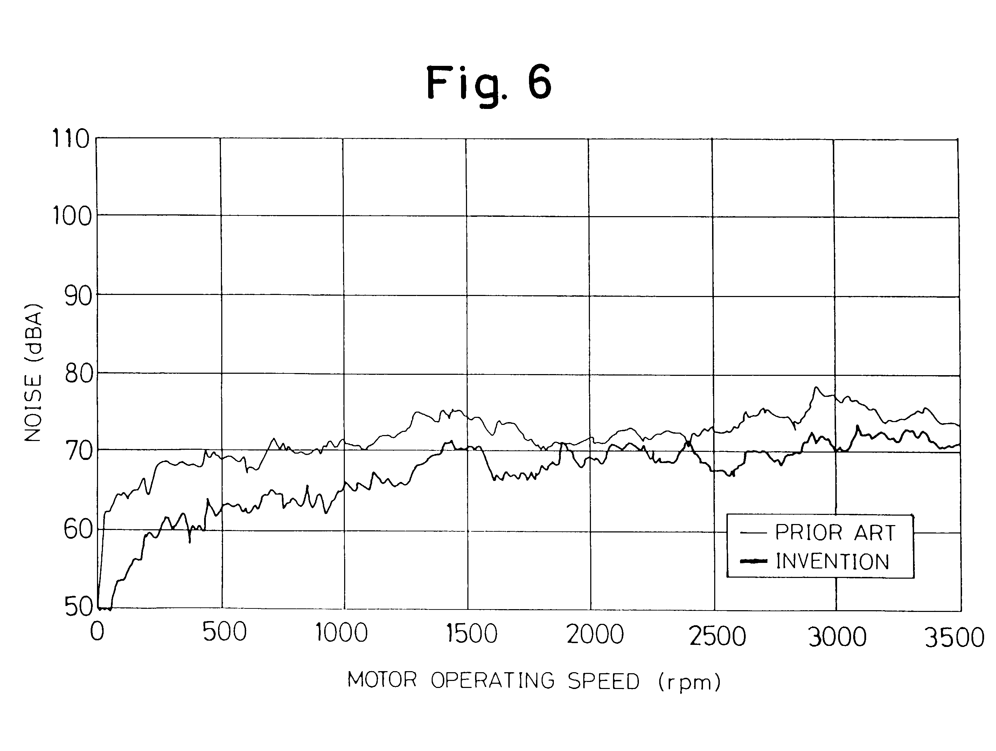

Increasing the number of winding turns would increase weight and cost. The reduction of the maximum magnetic force at the time of energization switching restrains the generation of noise resulting from vibrations produced. The graph of Fig. 6 shows that the invention reduces noises over the entire operation range. During the noise measurement indicated in Fig. 6, it was confirmed that the difference between the power inputs to conventional motors and according to the invention was small, and the torque reduction correspondingly small.

If the weak-magnetic portion 15 contains a non-magnetic high-electric resistant material, the strength of the rotor 10 will be increased. It is also possible to adjust rotational imbalances of the rotor 10 by means of such materials. It also reduces the effect of eddy currents in the rotor 10.

## Claims

1. A switched reluctance motor comprising:
a stator (11) having pole portions (lla) extending axially and projecting inward in radially-opposed pairs;
a rotor (10) having poles (14) extending axially and projecting outward towards the stator pole portions (11a) ; and
coils (13) wound around the pole portions (lla) wherein
a weak or non-magnetic portion (15) is provided in each of the rotor poles (14) extending in the rotational direction from the side of the pole (14) facing in the direction of counter-rotation characterized in that the weak or non-magnetic portion (15) extends radially inward from a position close to a radially outer end of the pole (14).

2. A switched reluctance motor according to claim 1 in which the rotor (10) is formed of a stack of plates.

3. A switched reluctance motor according to any preceding claim in which the weak or non-magnetic portion (15) contains non-magnetic high-electric resistance material.

4. A switched reluctance motor according to any preceding claim in which the weak or non-magnetic portion (15) is in the form of a groove.

5. A switched reluctance motor according to any of claims 1 to 3 in which the portion (15) is in the form of a hole.

6. A switched reluctance motor according to claim 5 in which the hole has a side extending radially inward.

## Patentansprüche

1. Geschalteter Reluktanzmotor, der
einen Stator (1) mit Polabschnitten (11a), die axial verlaufen und in radial gegenüberliegenden Paaren nach innen vorspringen,
einen Rotor (10) mit axial verlaufenden und nach außen zu den Statorpolabschnitten (lla) hin vorspringenden Polen (14) sowie
Spulen aufweist, die um die Polabschnitte (11a) gewickelt sind, wobei
in jedem der Rotorpole (14) ein schwach- oder nichtmagnetischer Abschnitt (15) vorgesehen ist, der in Rotationsrichtung von der Seite des Pols (14) verläuft, die in Richtung der Gegendrehung zeigt, **dadurch gekennzeichnet, dass** der schwach- oder nicht-magnetische Abschnitt (15) radial nach innen von einer Position nahe an einem radial äußeren Ende des Pols (14) verläuft.

2. Geschalteter Reluktanzmotor nach Anspruch 1, wobei der Rotor (10) aus einem Blechstapel gebildet ist.

3. Geschalteter Reluktanzmotor nach einem der vorangehenden Ansprüche, wobei der schwach- oder nicht-magnetische Abschnitt (15) ein nichtmagnetisches Material mit hohem elektrischen Widerstand enthält.

4. Geschalteter Reluktanzmotor nach einem der vorangehenden Ansprüche, wobei der schwach- oder nicht-magnetische Abschnitt (15) die Form einer Nut aufweist.

5. Geschalteter Reluktanzmotor nach einem der Ansprüche 1 bis 3, wobei der Abschnitt (15) die Form eines Lochs aufweist.

6. Geschalteter Reluktanzmotor nach Anspruch 5, wobei das Loch eine Seite aufweist, die radial nach innen verläuft.

## Revendications

1. Moteur à réluctance commuté comprenant :
un stator (11) comportant des parties de pôles (11a) s'étendant axialement et dépassant dans l'intérieur en paires radialement opposées ;
un rotor (10) comportant des pôles (14) s'étendant axialement et dépassant vers l'extérieur vers les parties de pôles de stator (11a) ; et
des bobines (13) enroulées autour des parties de pôles (11a)
dans lequel
une partie faiblement ou non magnétique (15) est prévue dans chacun des pôles de rotor (14) s'étendant dans le sens de rotation à partir du côté du pôle (14) en regard dans le sens inverse de rotation caractérisé en ce que la partie faiblement ou non magnétique (15) s'étend radialement vers l'intérieur à partir d'une position proche vers une extrémité radialement externe du pôle (14).

2. Moteur à réluctance commuté selon la revendication 1, dans lequel le rotor (10) est formé d'une pile de plaques.

3. Moteur à réluctance commuté selon l'une quelconque des revendications précédentes, dans lequel la partie faiblement ou non magnétique (15) contient un matériau non magnétique à haute résistance électrique.

4. Moteur à réluctance commuté selon l'une quelconque des revendications précédentes, dans lequel la partie faiblement ou non magnétique (15) est sous la forme d'une rainure.

5. Moteur à réluctance commuté selon l'une quelconque des revendications 1 à 3, dans lequel la partie (15) est sous la forme d'un trou.

6. Moteur à réluctance commuté selon la revendication 5, dans lequel le trou comporte un côté s'étendant radialement vers l'intérieur.
